# EUROPEAN PATENT APPLICATION

(11) **EP 2 908 496 A1**
(43) Date of publication of application: **19.08.2015**
(21) Application number: 15155190.0
(22) Date of filing: 16.02.2015
(51) Int. Cl.: H04L 29/06, H04W 12/04, H04W 84/12

(54) **Network system and method for setting-up a network system**

(30) Priority: 14.02.2014 TW 103104963; 16.09.2014 US 201414487833
(71) Applicant: Aevoe International Ltd., Tortola (VG)
(72) Inventor: Huang, Cheng-su, 114 Taipei City (TW); Lin, Shun-hwa, 269 Yilan Country (TW)
(74) Representative: Holme Patent A/S

(57) **Abstract**

A network system and a method of setting-up the network system are disclosed. The network system can be used to safely transmit sensitive information such as service set identifiers and keys. The network systems comprising an access point, a transmission element which is connected to the access point with a connector, and a station which includes a socket to receive the connector. The connector of the transmission element is inserted into the socket of the station, and the transmission element is connected to the access point. When the station needs to connect to a service network, the station sends a setup signal via the transmission element to the access point, and the access point sends a confirmation signal via the transmission element back to the station. Typically, the setup signal and the confirmation signal are audio signals.

## Description

### FIELD

The present disclosure relates to a network system and methods of setting-up the network system. In particular, the present disclosure relates to a network system and to a method of setting-up the network system that entails sending and receiving audio signals through a transmission element to and from a station and access point. The network system is particularly useful for securely transmitting sensitive information such as service set identifiers and keys.

### BACKGROUND

Starting from the early dial-up internet connections to the current, fast-speed broadband connections, the internet has become a critical part of many people's daily lives. Internet applications continuing fueling new waves of technology and societal trends. Thanks to the advent of wireless networks, internet users are no longer confined to the location of a physical internet connection, nor are they necessarily restricted to a particular geographical area such as the home or office. Instead, internet users can now connect to and access the internet from almost anywhere, as long as they have equipment that supports a wireless internet connection (*e.g.,* WiFi, wireless telephone access, etc.). Not only are wireless connections convenient, they save costs by eliminating the need for cables and other equipment required for wired connections.

With the growing popularity of wireless networks, the security of wireless transmissions has become a concern for both individuals and businesses. Hackers can illegally access a wireless network via loopholes in conventional standard security mechanisms, thereby leaving data transmitted over these wireless networks vulnerable to exploitation. Furthermore, hackers can secretly access (e.g., scapegoat) a wireless network and use it to prey on other internet users without detection. Various industries are therefore focused on developing systems and methods for safely and securely transmitting sensitive information over wireless networks.

### BRIEF DESCRIPTION OF THE FIGURES

Many aspects of a network equipment and method for selecting communication path can be better understood with reference to the following drawings. The components in the drawings are not necessarily drawn to scale, the emphasis instead being placed upon clearly illustrating the principles of the network equipment and the method for selecting communication path. Moreover, in the drawings, like reference numerals designate corresponding parts throughout the several views. Wherever possible, the same reference numbers are used throughout the drawings to refer to the same or like elements of an embodiment.
FIG. 1 is a schematic diagram of a network system according to an embodiment of the present disclosure.
FIG. 2 is a flow diagram showing a method of setting-up a network system according to an embodiment of the present disclosure.
FIG. 3 is schematic diagram showing the execution sequences corresponding to the method of setting-up a network as depicted in FIG. 2.
FIG. 4 is a schematic diagram of a network system according to an embodiment of the present disclosure.

### DETAILED DESCRIPTION

Disclosed herein is a network system and a method of setting-up the network system. The network system can be used to safely transmit sensitive information such as service set identifiers and keys.

The network system comprises an access point, a transmission element which is connected to the access point with a connector, and a station which includes a socket to receive the connector. The connector of the transmission element is inserted into the socket of the station, and the transmission element is connected to the access point. When the station needs to connect to a service network, the station sends a setup signal via the transmission element to the access point, and the access point sends a confirmation signal via the transmission element, which is received by the station. Typically, the setup signal and the confirmation signal are audio signals.

The disclosure also relates to a method of setting-up a network system comprising: sending a setup signal from a station via a transmission element to an access point, which is connected to a service network, wherein the transmission element connects to the station with a connector that is inserted into a socket of the station; and receiving a confirmation signal via the transmission element back to the station. The setup signal and the confirmation signal are typically audio signals.

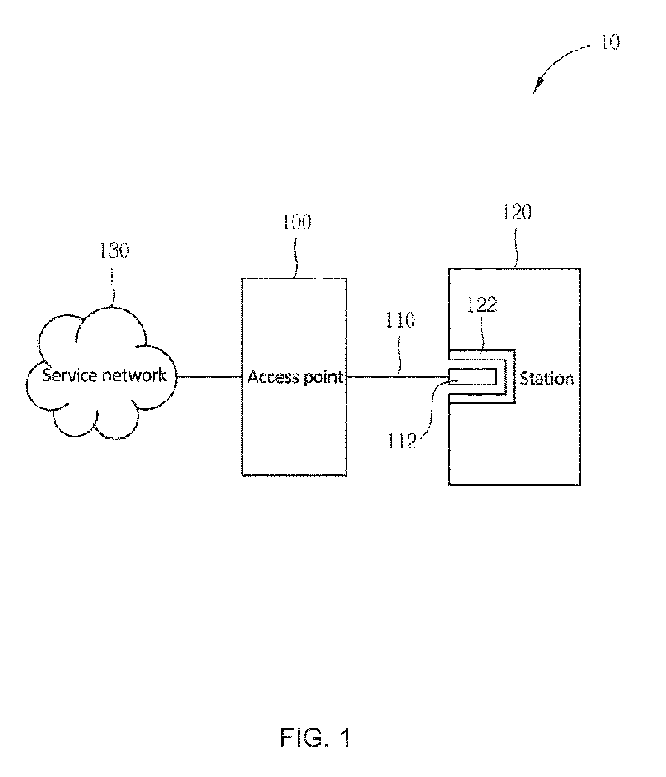

FIG. 1 is a schematic diagram of network system 10 according to an embodiment of the present disclosure. The network system 10 includes an access point 100, a transmission element 110, and a station 120. The transmission element 110 is connected to the access point 100, and includes a connector 112. When a connector 112 of the transmission element 110 is inserted into a socket 122 of the station 120, the station 120 can communicate with the access point 100 via the transmission element 110. The connector 112 can be used to transmit analogical audio signals, and can be, for example, a tip sleeve connector, tip ring sleeve connector, or tip ring ring sleeve connector with a standard diameter of 3.5 mm used in portable electronic devices (such as mobile phones, smart phones, e-books, tablet computers, music players, etc.) or personal computers. The socket 122 is designed to have a dimension corresponding to the connector 112, which can be a standard headphone jack.

Station 120 can exchange messages with the access point 100 via the transmission element 110. Furthermore, when the station 120 wants to connect to a service network 130 of the access point 100, the station 120 can send a service set identifier (SSID) and a key of a service area of a service network 130 via the transmission element 110. Since the service set identifier and key are audio signals, attackers cannot acquire the service set identifier or crack the key by intercepting radio-frequency signal packets.

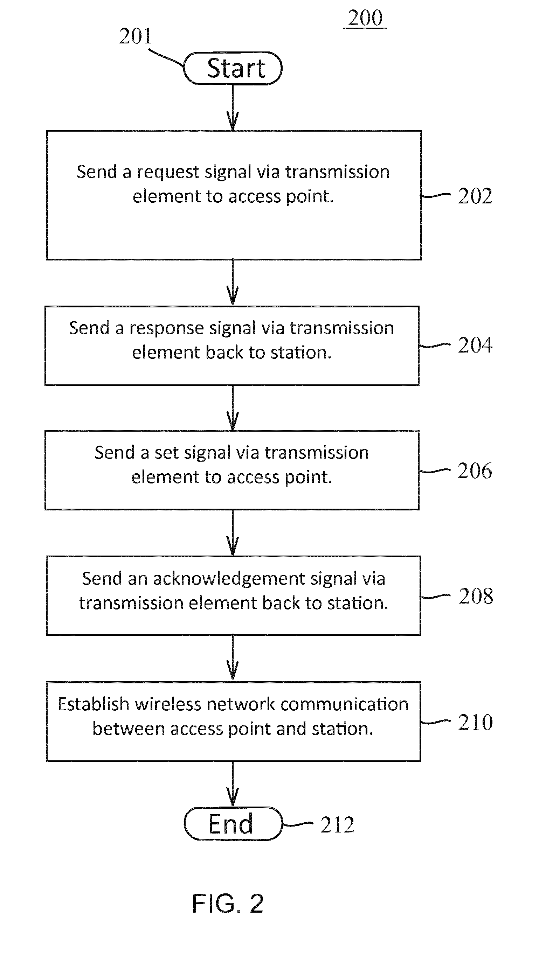

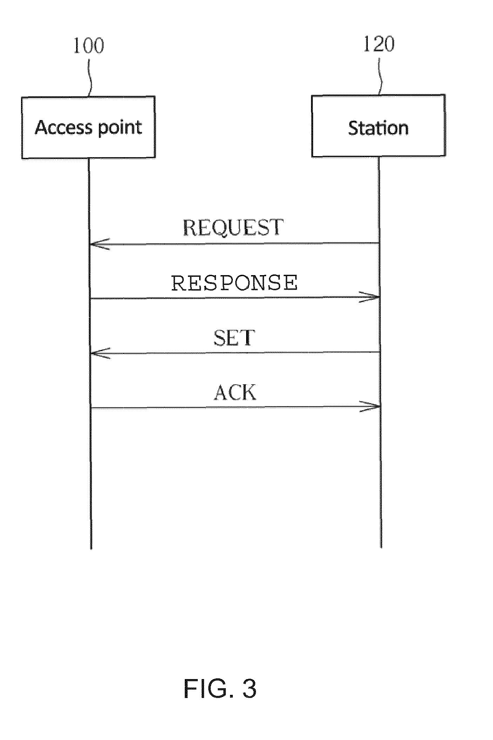

FIG. 2 is a flow diagram showing a method of setting-up a network system according to an embodiment of the present disclosure. FIG. 3 is schematic diagram showing the execution sequence for carrying out the method of setting-up the network depicted in FIG. 2. The method 200 of setting-up a network depicted in FIG. 2 comprises the following steps:
**Step 201:** Start.
**Step 202:** When the connector 112 of the transmission element 110 is inserted into the socket 122 of the station 120, the station 120 sends a request signal via the transmission element 110 to the access point 100.
**Step 204:** The access point 100 sends a response signal via the transmission element 110 back to the station 120.
**Step 206:** The station 120 sends a set signal via the transmission element 110 to the access point 100.
**Step 208:** The access point 100 sends an acknowledgment signal via the transmission element 110 back to the station 120.
**Step 210:** The access point 100 and the station 120 establish a wireless network communication.
**Step 212:** End.

When the connector 112 of the transmission element 110 is inserted into the socket 122 of the station 120, the station 120 can send a request signal via the transmission element 110 to the access point 100, in order to connect to the access point 100. When the access point 100 receives the request signal, the access point 100 sends a response signal via the transmission element 110 back to the station 120. After receiving the response signal, the station 120 sends a set signal via the transmission element 110 back to the access point 100. The set signal includes a service set identifier and a key of the service area of the service network 130 or further includes an encryption type and other information. The service set identifier is an identifier in compliance with IEEE 802.11, and is used to prevent too many random connections to the access point 100. After receiving the set signal, the access point 100 sends an acknowledgment signal via the transmission element 110 back to the station 120, so that the access point 100 and the station 120 can be connected. It is noteworthy that the connection between the access point 100 and the station 120 can be a wireless network communication, that is to exchange information via radio frequency signal packet switching or to continue to exchange audio signals via the transmission element 110.

When the connector 112 of the transmission element 110 is inserted into the socket 122 of the station 120, the station 120 and the access point 100 can exchange request signal, response signal, set signal and acknowledgement signal via the transmission element 110. The request signal, response signal, set signal and acknowledgement signal are audio signals. Therefore hackers who intend to steal the key cannot gather the radio frequency signals around the access point 100 to crack the key according to the service set identifier.

It is worth noting that the audio signals are analog electrical signals, rather than electromagnetic signals. However, the present disclosure is not limited thereto, and the audio signals can also be digitalized electronic signals. Additionally, the network system 10 in FIG. 1 or the method of setting-up the network depicted in FIG. 2 and 3 are merely examples of embodiments of the present disclosure-those with general knowledge in the art can make different modifications, without being limited thereto. For example, the station 120 can be portable electronic devices (such as mobile phones, smart phones, e-books, tablet computers and music players, etc.), personal computers or other electronic devices, and the station 120 can be different types of access devices. Furthermore, the transmission element 110 has the connector 112 which can be inserted into the socket 122 of the station 120, and the transmission element 110 can have another connector to be inserted into a socket of the access point 100, but the present disclosure is not limited thereto. Different ways of connection between the transmission element 110 and the access point 100 are within the scope of the present disclosure.

To further ensure the safe transmission of the service set identifiers and the key, the method of setting-up the network can be further designed according to the 4-way handshake program. Specifically, the request signal sent by the station 120 to the access point 100 can abide by the extensible authentication protocol over LAN, and can contain an authentication algorithm number, which is used to indicate if the network system is an open system authentication or a shared key authentication. On the other hand, the response signal can contain a challenge text, and the challenge text can have 128 bits or other length according to the type of encryption. The set signal can contain a service set identifier, a key, and an encryption type. In addition, according to the type of encryption, the station 120 can generate an initialization vector (IV) based on a 24-bit random value, a key and other relevant data to encrypt the challenge text, and mix the encrypted challenge text into the set signal. After receiving the set signal, the access point 100 can verify the encrypted challenge text, to validate the correctness of the key in the set signal. When the service set identifier and the key satisfy the requirement of the access point 100, the access point 100 sends an acknowledgement signal back to the station 120, to allow the station 120 to establish a connection. It is worth noting that the type of encryption can be wired equivalent privacy (WEP) based on RC4 stream cipher or Wi-Fi protected access (WPA), but is not limited thereto. According to different types of encryption, the length of the challenge text and the random number as well as the content of the request signal, response signal, set signal, and acknowledgement signal can be appropriately adjusted.

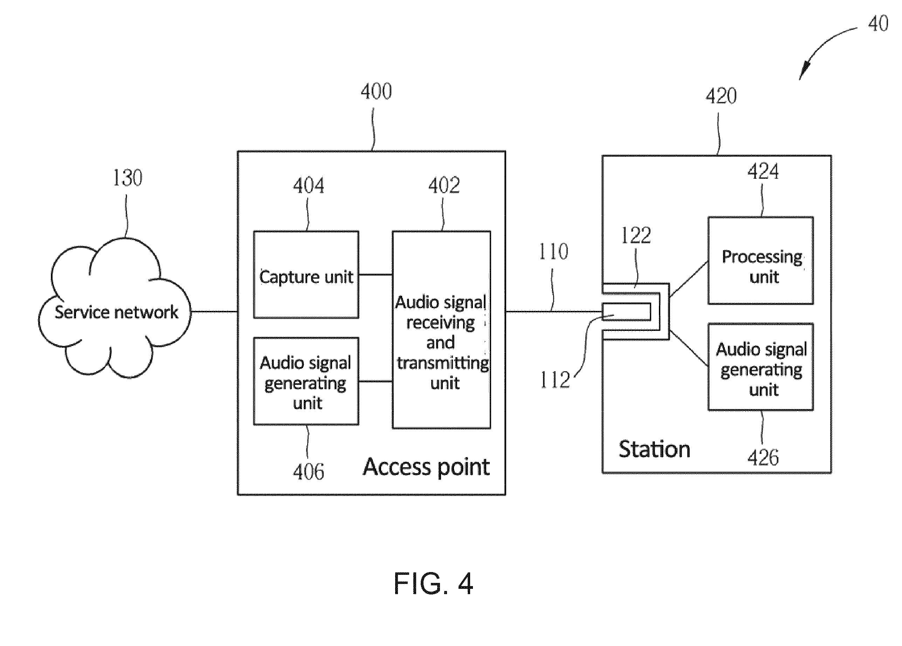

To retrieve the service set identifier, key or encryption type of the set signal from the audio signals, elements of the access points can be appropriately designed. Referring to FIG. 4, there is shown a schematic diagram representing a network system 40 according to one embodiment of the present disclosure. As shown in FIG. 4, the structure of the network system 40 is substantially similar to the network system 10 (depicted in FIG. 1), so the same elements are represented by the same symbols. The difference is that the access point 400 of the network system 40 includes an audio signal receiving and transmitting unit 402, a capture unit 404 and an audio signal generating unit 406. The audio signal receiving and transmitting unit 402 is coupled to the transmission element 110, to receive or transmit analogical audio signals, such as request signals and set signals, and appropriately amplify signals and filter out noises. Then, the audio signal receiving and transmitting unit 402 inputs the audio signal into the capture unit 404, and the capture unit 404 further captures the service set identifier, key and encryption type of the audio signal. For example, the key is recognized after verification of the encrypted challenge text. In addition, the service set identifier, key or encryption type can be superimposed for a specific frequency band in the audio signal, such as relatively high frequency band or relatively low frequency band. Accordingly, the capture unit 404 can comprise a high-pass filter, a lowpass filter or a band-pass filter to filter out the information above or below the cutoff frequency or the information of the specific frequency band. The audio signal can contain information of other frequency bands at the same time, allowing for the simultaneous exchange of other information. The audio signal generating unit 406, which is coupled to the audio signal receiving and transmitting unit 402, is used to generate response signals, acknowledgement signals, and other audio signals, and output audio signals via the audio signal receiving and transmitting unit 402.

Station 420 of the network system 40 further comprises a processing unit 424 and an audio signal generating unit 426 in addition to the socket 122. The socket 122 can receive audio signals from the transmission element 110, such as response signals and acknowledgement signals, and appropriately amplify signals and filter out noises. When the socket 122 inputs audio signals into the processing unit 424, the processing unit 424 can further process the audio signals. In addition, the audio signal generating unit 426, which is coupled to the socket 122, is used to generate request signals, set signals and other audio signals, and output audio signals via the socket 122 to the transmission element 110. The audio signal generating unit 426 can further process the set signal according to the type of encryption, and mix the service set identifier, key or type of encryption into the set signal. Further, the transmission element 110 can support parallel transmission by virtue of dual-channel or multi-channel functions.

The present disclosure mixes the service set identifier and key into audio signals and the station exchanges the audio signals with the access point via the transmission element. Thus, hackers who intend to steal the key cannot gather the radio frequency signals around the access point to crack the key according to the service set identifier.

The processing unit 424 can implement the processes according to the present disclosure and can include a processor optionally coupled directly or indirectly to memory elements through a system bus, as well as software or other program code for executing and carrying out processes described herein. In some implementations, the technology is implemented with software, which includes but is not limited to firmware, resident software, microcode, a Field Programmable Gate Array (FPGA) or Application-Specific Integrated Circuit (ASIC), etc.

Memory elements can include any computer usable or computer readable medium including any apparatus that can contain, store, communicate, propagate, or transport the software or other program code for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. A processor can include a microprocessor, a microcontroller, and/or a central processing unit, among others. While a single processor can be used, the present disclosure can be implemented over a plurality of processors as well. Both processors and program code for implementing each aspect of the technology can be centralized or distributed (or a combination thereof) as known to those skilled in the art.

The above description provides examples of various embodiments of the present disclosure and should not be construed as limiting. Modifications and alterations to the examples and the subject matter described above are encompassed in the scope of this disclosure even if they are not explicitly set forth.

### DESCRIPTION OF SYMBOLS

- **10, 40**: Network system
- **100, 400**: Access point
- **110**: Transmission element
- **112**: Connector
- **120, 420**: Station
- **122**: Socket
- **130**: Service network
- **20**: Network setup method
- **REQUEST**: Request signal
- **RESPONSE**: Response signal
- **SET**: Set signal
- **ACK**: Acknowledgement signal
- **S201∼S212**: Steps
- **402**: Audio signal receiving and transmitting unit
- **404**: Capture unit
- **406, 426**: Audio signal generating unit
- **424**: Processing unit

## Claims

1. A method of setting-up a network system comprising:
sending a setup signal from a station via a transmission element to an access point, which is connected to a service network; and
receiving a confirmation signal from the access point via the transmission element back to the station,
wherein the transmission element connects to the station with a connector that is inserted into a socket of the station, and
wherein the setup signal and the confirmation signal are audio signals.

2. The method as described in claim 1, wherein the setup signal comprises a service set identifier (SSID) and a key of a service area of the service network.

3. The method as described in claim 2, wherein the setup signal further comprises an encryption type of a service area of the service network.

4. The method as described in claim 1, further comprising:
sending a request signal via the transmission element to the access point; and
receiving a response signal from the access point via the transmission element back to the stations;
wherein, the request signal and the response signal are audio signals.

5. The method as described in claim 1, wherein the access point comprises a reading unit, which is used to process the audio signals and to capture and decode the setup signal.

6. The method as described in claim 1, wherein the connector is a tip sleeve connector, a tip ring sleeve connector or a tip ring ring sleeve connector.

7. The method as described in claim 1, wherein the station is a portable electronic device.

8. The method as described in claim 7, wherein portable electronic device is a mobile phone, smart phone, e-book, tablet computer, or a music player.

9. The method of claim 1, wherein the audio signals are analog electrical signals or digitalized electronic signals.

10. A network system comprising:
an access point;
a transmission element, which is connected to the access point via a connector, wherein, the connector of the transmission element is inserted into the socket of the station, and the transmission element is connected to the access point; and
a station, which comprises a socket;
wherein, the station connects to a service network of the access point by sending a setup audio signal via the transmission element to the access point, and receiving an acknowledgment audio signal from the access point via the transmission element back to the station.

11. The network system as described in claim 10, wherein the setup signal includes a service set identifier (SSID) and a key of a service area of the service network.

12. The network system as described in claim 11, wherein the setup signal further includes an encryption type of a service area of the service network.

13. The network system as described in claim 10, wherein the station sends an audio request signal via the transmission element to the access point; and receives an audio response signal from the access point via the transmission element back to the station.

14. The network system as described in claim 10, wherein the access point comprises a reading unit, which is used to process audio signals to capture and decode the setup signal.

15. The network system as described in claim 10, wherein the connector is a tip sleeve connector, a tip ring sleeve connector or a tip ring ring sleeve connector.

16. The network system as described in claim 10, wherein the station is a portable electronic device.

17. The network system as described in claim 16, wherein portable electronic device is a mobile phone, smart phone, e-book, tablet computer, or a music player.

18. The network system as described in claim 10, wherein the audio signals are analog electrical signals or digitalized electronic signals.

19. The network system as described in claim 15, wherein the connector has a standard diameter of 3.5 mm.

20. The network system as described in claim 11, wherein the service set identifier (SSID) and the key are superimposed for a specific frequency band in the audio signal.
